# EUROPÄISCHE PATENTSCHRIFT

(11) **EP 2 153 075 B1**
(45) Veröffentlichungstag und Bekanntmachung des Hinweises auf die Patenterteilung: **08.02.2012**
(21) Anmeldenummer: 08758388.6
(22) Anmeldetag: 06.05.2008
(51) Int. Cl.: F16C 17/10, F04D 29/041

(54) **Lager**
Bearing
Palier

(30) Priorität: 22.05.2007 DE 102007023628
(43) Veröffentlichungstag der Anmeldung: 17.02.2010
(73) Patentinhaber: ixetic Bad Homburg GmbH, 61352 Bad Homburg (DE)
(72) Erfinder: WEBERT, Dirk, 71364 Winnenden (DE); PRINZHORN, Karl, 61169 Friedberg (DE); RIPP, Jürgen, 55127 Mainz (DE)
(74) Vertreter: Gleiss, Alf-Olav
(86) Internationale Anmeldenummer: PCT/EP2008/003613
(87) Internationale Veröffentlichungsnummer: WO 2008/141725

(56) Entgegenhaltungen:
- DE-A1- 10 247 666
- US-A- 2 941 851

## Beschreibung

Die Erfindung betrifft ein Lager, insbesondere Axiallager einer gleitgelagerten Welle oder Achse, gemäß Oberbegriff des Anspruchs 1.

Lager, insbesondere Axiallager einer gleitgelagerten Welle oder Achse, der hier angesprochenen Art sind bekannt. Bei einem derartigen Lager ist die Welle oder Achse in einer Lagerbuchse angeordnet. Die Lagerbuchse ist dabei fest in einer Lagerbohrung beispielsweise eines Flanschs eingebracht und gegen eine Bewegung in axialer Richtung gesichert. Um die Welle oder Achse nicht nur radial sondern auch axial sichern zu können, ist die Welle oder Achse im Bereich der Lagerbohrung des Flanschs mit einem Wellenbund ausgestattet, außerdem ist eine Axialsicherung, die in der Regel mindestens eine Anlaufscheibe umfasst, in die Lagerbohrung eingebracht. Eine Anlaufscheibe wird bevorzugt an einem Ende der Lagerbuchse angeordnet und verhindert eine Verlagerung der Welle oder Achse in axialer Richtung bezüglich der Lagerbohrung des Flanschs. Eine zweite Anlaufscheibe wird bevorzugt an einem anderen Ende der Lagerbuchse angeordnet. Über eine das Lager abschließende Buchse wird eine Verlagerung der Lagerbuchse und der Anlaufscheiben verhindert. Von derartigen Lagern ist bekannt, dass eine Toleranzkette des Axialspiels sich -in axialer Richtung gesehen- zum Einen aus der Länge der Lagerbohrung und zum Anderen aus der Dicke der beiden Anlaufscheiben sowie der Länge der Lagerbuchse und der das Lager sichernden Buchse zusammensetzt. Es hat sich gezeigt, dass die notwendigen Fertigungstoleranzen der am Lagerspiel beteiligten Einzelteile zu hohen Axiallagerspielen führen. Es wurde bereits versucht, durch eine Erhöhung der Genauigkeit der Fertigungstoleranzen aller beteiligten Einzelteile das Axiallagerspiel zu reduzieren. Diese Vorgehensweise ist jedoch mit erheblichen Kosten verbunden. Darüber hinaus ist die erreichte Reduzierung des Lagerspiels oft nicht ausreichend.

Es ist daher Aufgabe der Erfindung, ein Lager zu schaffen, das den oben genannten Nachteil nicht aufweist.

Zur Lösung dieser Aufgabe wird ein Lager vorgeschlagen, welches die in Anspruch 1 genannten Merkmale umfasst. Das Lager ist für eine Welle oder Achse vorgesehen, wie sie sich beispielsweise in Pumpen von Fahrzeugen finden läßt. Bei dem Lager handelt es sich insbesondere um ein Axiallager für eine gleitgelagerte Welle oder Achse. Es weist eine Lagerbuchse, welche die Welle oder Achse radial lagert, und eine Axialsicherung auf, die mindestens eine erste Anlaufscheibe aufweist, die eine axiale Verlagerung der Welle oder Achse gegenüber einem das Lager aufnehmenden Flansch verhindert. Der Flansch weist eine in diesen eingebrachte Lagerbohrung auf, in der die erste Anlaufscheibe sowie ein Bund einer das Lager durchdringenden Welle oder Achse angeordnet sind. Darüber hinaus weist das Lager eine die Lagerbohrung abschließende Buchse auf. Das Lager zeichnet sich dadurch aus, dass die Dicke der ersten Anlaufscheibe und die Dicke des Bundes -in axialer Richtung der Welle oder Achse gemessen- einerseits und andererseits die -in axialer Richtung der Welle oder Achse gemessene- Länge der Lagerbohrung das axiale Spiel des Lagers bestimmen. Besonders vorteilhaft bei dieser Ausführungsform des Lagers ist es, das bei gleichbleibendem Toleranzbereich des Lagerspiels nur drei Einzelteile die Toleranzkette des Axialspiels bestimmen. Die Fertigungstoleranzen der an der Toleranzkette des Axialspiels beteiligten Einzelteile können dementsprechend erweitert und eine Fertigung derselben kostengünstiger realisiert werden. Ein weiterer Vorteil des hier vorliegenden Ausführungsbeispiels des Lagers ist es, dass bei einer gleichbleibenden Fertigungstoleranz aller an der Toleranzkette des Axialspiel beteiligten Einzelteile das Axialspiel sich aufgrund der Reduzierung der an der Toleranzkette beteiligten Einzelteile auf drei Einzelteile wesentlich verringert.

Bevorzugt wird ein Ausführungsbeispiel des Lagers, das sich dadurch auszeichnet, dass die Lagerbuchse fest in die Lagerbohrung eingebracht ist. Sie kann beispielsweise eingepresst, eingelötet oder eingeklebt sein. Besonders vorteilhaft bei diesem Ausführungsbeispiel ist es, dass die Lagerbuchse gegen eine axiale Verschiebung gesichert ist und nicht durch andere Einzelteile des Lagers gegen eine Verschiebung gesichert werden muss.

Bei einem weiteren bevorzugten Ausführungsbeispiel ist es vorgesehen, dass die Lagerbuchse -senkrecht zur Längsachse der Lagerbuchse verlaufende- Stirnflächen an ihren Enden aufweist und eine erste Stirnfläche der Lagerbuchse an einer Fläche der Lagerbohrung anliegt.

Bei einem weiteren bevorzugten Ausführungsbeispiel des Lagers ist es vorgesehen, dass die Axialsicherung eine zweite Anlaufscheibe aufweist, die an der der ersten Stirnfläche gegenüberliegenden zweiten Stirnfläche der Lagerbuchse angeordnet ist. Die Lagerbuchse befindet sich also zwischen der ersten und der zweiten Anlaufscheibe, wobei die zweite Anlaufscheibe die zweite Stirnfläche der Lagerbuchse nicht berührt.

Weiterhin wird ein Ausführungsbeispiel des Lagers bevorzugt, das sich dadurch auszeichnet, dass die Lagerbuchse zumindest an ihrer ersten Stirnfläche, die an der ersten Anlaufscheibe anliegt, eine Positionierungseinrichtung aufweist, welche die erste Anlaufscheibe im Lager positioniert. Besonders vorteilhaft bei diesem Ausführungsbeispiel ist es, dass die erste Anlaufscheibe durch das Zusammenwirken mit der fest in das Lager eingebrachten Lagerbuchse verdrehsicher im Lager angeordnet ist.

Bei einem weiteren bevorzugten Ausführungsbeispiel ist vorgesehen, dass die Lagerbuchse an der zweiten Anlaufscheibe anliegt. Besonders vorteilhaft bei diesem Ausführungsbeispiel ist es, dass die Buchse die zweite Anlaufscheibe auf einfache Weise abstützt und die zweite Anlaufscheibe dadurch in der Lagerbohrung fixiert werden kann.

Besonders bevorzugt wird ein Ausführungsbeispiel des Lagers, das sich dadurch auszeichnet, dass die Buchse, welche die Lagerbohrung abschließt, in den Flansch eingepresst, eingeklebt oder eingelötet ist und/oder durch eine Verbördelung gesichert ist.

Bei einem weiteren bevorzugten Ausführungsbeispiel ist es vorgesehen, dass das Lager eine Entlastungseinrichtung aufweist. Besonders vorteilhaft bei diesem Ausführungsbeispiel ist es, dass beispielsweise Leckageflüssigkeit aus dem Lager geleitet werden kann und somit ein Aufbau von auf das Lager wirkenden axialen Druckkräften vermieden wird.

Besonders bevorzugt wird ein Ausführungsbeispiel des Lagers, das sich dadurch auszeichnet, dass die Entlastungseinrichtung eine in die Lagerbohrung mündende Entlastungsbohrung aufweist.

Weiterhin wird ein Ausführungsbeispiel des Lagers bevorzugt, dass sich dadurch auszeichnet, dass die Entlastungseinrichtung mindestens eine in eine Innenfläche der Lagerbuchse eingebrachte Nut und mindestens eine in eine erste Anlaufscheibe eingebrachte Aussparung aufweist. Besonders vorteilhaft bei diesem Ausführungsbeispiel ist es, dass die Leckageflüssigkeit durch das Lager geleitet wird und dadurch gleichzeitig eine Schmierung des Lagers gewährleistet ist.

Besonders bevorzugt wird ein Ausführungsbeispiel des Lagers, das sich dadurch auszeichnet, dass eine Ausnehmung vorgesehen ist, die in den Grund der Lagerbohrung eingelassen ist und die Lagerbohrung mit einer die Welle oder Achse aufnehmenden Wellenkammer verbindet. Besonders vorteilhaft bei dieser Ausführungsform des Lagers ist es, dass die Leckageflüssigkeit zu der Entlastungseinrichtung gelangen und abfließen kann.

Weiterhin wird ein Ausführungsbeispiel des Lagers bevorzugt, das sich dadurch auszeichnet, dass der Flansch an einem Ende, in welchem die die Lagerbohrung abschließende Buchse eingebracht ist, einen umbördelbaren Materialrand aufweist. Besonders vorteilhaft bei diesem Ausführungsbeispiel des Lagers ist es, dass die Befestigung der Lagerbuchse auf einfache und kostengünstige Weise realisiert werden kann.

Bei einem weiteren bevorzugten Ausführungsbeispiel ist es vorgesehen, dass die Buchse mindestens ein Dichtelement aufweist. Vorteilhaft bei diesem Ausführungsbeispiel des Lagers ist es, dass eine im Lager befindliche Schmier- und/oder Leckageflüssigkeit nicht über das von der Lagerbuchse abgeschlossene Ende des Flanschs nach außen hin austreten kann.

Weiterhin wird ein Ausführungsbeispiel des Lagers bevorzugt, das sich dadurch auszeichnet, dass das Lager ein als O-Ringdichtung und/oder als Radialwellendichtung ausgebildetes Dichtelement aufweist.

Weitere Ausgestaltungen ergeben sich aus den Unteransprüchen.

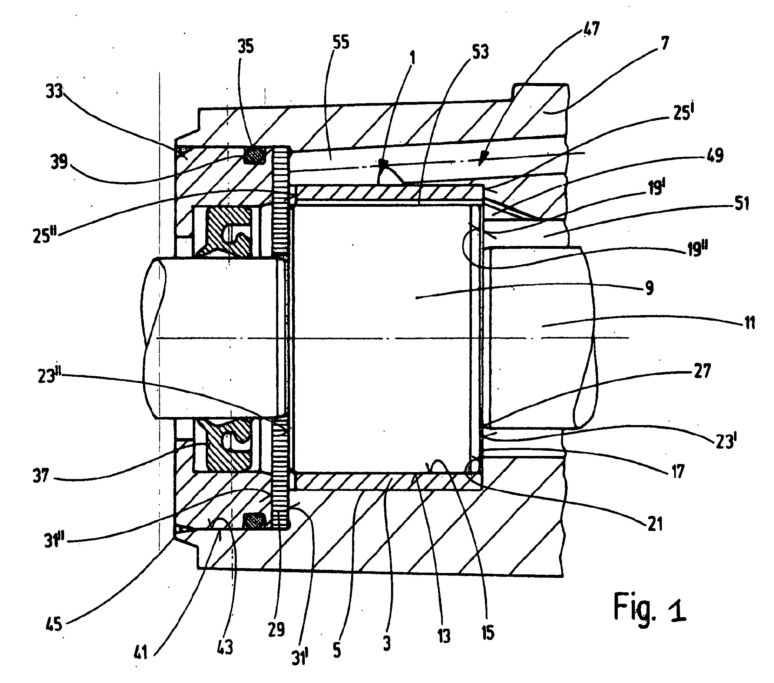

Die Erfindung wird im Folgenden anhand der Zeichnung näher erläutert. Die einzige Figur zeigt einen Längsschnitt durch ein Lager.

Die Figur zeigt einen Längsschnitt durch ein als Gleitlager ausgebildetes Lager 1, mit einer Lagerbuchse 3, die in einer Lagerbohrung 5 eines Flanschs 7 angeordnet ist. In der Lagerbuchse 3 ist ein Wellenbund 9 einer Achse oder Welle 11 angeordnet, also ein Bereich mit vergrößertem Außendurchmesser. Der Wellenbund 9 weist eine Außenfläche 13 auf, die an einer Innenfläche 15 der Lagerbuchse 3 anliegt. Außerdem ist in der Lagerbohrung 5 des Flanschs 7 eine eine erste Anlaufscheibe 17 aufweisende Axialsicherung vorgesehen, die mit ihrer ersten Oberfläche 19' am Grund 21 der Lagerbohrung 5 und mit ihrer zweiten Oberfläche 19" sowohl an der ersten Außenfläche 23' des Wellenbunds 9 als auch an der ersten Stirnfläche 25' der Lagerbuchse 3 anliegt. Die erste Anlaufscheibe 17 weist eine Öffnung 27 auf, in der die Welle 11 angeordnet ist.

Aus der Figur ist außerdem erkennbar, dass die Axialsicherung eine zweite Anlaufscheibe 29 aufweist, die mit ihrer ersten Außenfläche 31' an der zweiten Außenfläche 23" des Wellenbunds 9 anliegt. Die zweite Außenfläche 31" der zweiten Anlaufscheibe 29 liegt an einer Buchse 33 an. Die Buchse 33 ist fest in die Lagerbohrung 5 des Flanschs 7 eingebracht und weist Dichtungselemente 35 und 37 auf.

Das erste Dichtungselement 35 ist in einer Nut 39, die in einer Außenfläche 41 der Buchse 33 eingelassen ist, angeordnet. Das Dichtungselement 33 ist als O-Ringdichtung ausgelegt und bildet eine Dichtung zwischen der Außenfläche 41 der Buchse 33 und einer Innenfläche 43 des Flanschs 7 aus. Das zweite Dichtungselement 37 ist als Radialwellendichtring ausgebildet und dichtet gegenüber der Welle 11.

Der Flansch 7 weist an einem Ende einen umbördelbaren Rand 45 auf. Die Verbördelung sichert die im Flansch angeordnete Buchse 33 gegen eine Verschiebung in axialer Richtung und stellt einen Flächenkontakt der Buchse 33 mit der zweiten Anlaufscheibe 29 sicher. Es ist aber auch denkbar, dass die Buchse 33 beispielsweise in den Flansch eingeklebt, eingelötet, eingepresst oder in irgendeiner anderen, die Buchse gegen eine axiale Verschiebung sichernde Art und Weise fixiert wird.

Darüber hinaus ist aus der Figur ersichtlich, dass eine Entlastungseinrichtung 47 vorgesehen ist, die dazu dient, Leckageöl beispielsweise zu einem Tank oder der Saugseite einer Pumpe zu leiten. Die Entlastungseinrichtung 47 weist eine Ausnehmung 49 auf, die in den Grund 21 der Lagerbohrung 5 eingelassen ist und die Lagerbohrung 5 mit einer Wellenkammer 51 verbindet. Darüber hinaus weist die Entlastungseinrichtung 47 mindestens eine, in der Figur nicht dargestellte, durchgehende Aussparung in der ersten Anlaufscheibe 17, eine axial verlaufende Nut 53, die durchgehend in die Innenfläche 15 der Lagerbuchse 3 eingelassen ist, und eine Entlastungsbohrung 55 auf.

Ein Fluid, beispielsweise Leckageflüssigkeit, das in die Wellenkammer 51 eintritt, gelangt an die erste Anlaufscheibe 17. Dort wird es über die Ausnehmung 49, über die durchgehende Aussparung in der ersten Anlaufscheibe 17 und die Nut 53 der Lagerbuchse 3 an der Außenfläche 13 des Wellenbunds 9 vorbei zu der Entlastungsbohrung 55 geleitet. Die Entlastungsbohrung 55 ist beispielsweise mit einem Tank oder einer Pumpe verbunden, die das Fluid über die Entlastungsbohrung 55 aus der Lagerbohrung 5 saugt. Die Entlastungseinrichtung 55 gewährleistet, dass im Lager 1 keine Stauung des Fluids stattfindet. Somit werden in axialer Richtung auf die Welle 1 und auf die Anlaufscheiben wirkende Kräfte vermieden.

Im Folgenden wird die Wirkungsweise des Lagers näher erläutert.

Die erste Anlaufscheibe 17 und die Lagerbuchse 3 werden in eine Lagerbohrung 5 eines Flanschs 7 eingebracht. Die Stirnfläche 25' der Lagerbuchse 3 berührt dabei die zweite Oberfläche 19" der ersten Anlaufscheibe 17. Dabei ist die Lagerbuchse 3 in die Lagerbohrung 5 beispielsweise eingepresst, eingeklebt oder eingelötet. Die Welle 11 ist in der Öffnung 27 der ersten Anlaufscheibe 17 und der Wellenbund 9 der Welle 11 in der Lagerbuchse 3 angeordnet. Durch die Buchse 33 wird der Wellenbund 9 der Welle 11 über eine zweite Anlaufscheibe 29 mit geringem Spiel in der Lagerbohrung 5 axial positioniert. Die Buchse 33 ist dabei in den Flansch beispielsweise eingepresst, eingeklebt, eingelötet und/oder durch eine die Buchse 33 sichernde Verbördelung des Randes 45 des Flanschs 7 gegen eine axiale Verschiebung gesichert. Eine Entlastungseinrichtung 47 führt Fluid, beispielsweise Leckageflüssigkeit, in der oben geschilderten Weise ab und entlastet dadurch das Lager 1.

Diese Ausgestaltungsform zeichnet sich im Wesentlichen dadurch aus, dass das Lagerspiel sich ausschließlich einerseits aus der axialen Länge des Wellenbunds 9 und der in axiale Richtung gemessenen Dicke der ersten Anlaufscheibe 17 und andererseits aus der axialen Länge der Lagerbohrung 5 bestimmt. Insbesondere die Lagerbuchse 3 ist so ausgebildet, dass eine zweite- Stirnfläche 25" eine erste Außenfläche 31' der zweiten Anlaufscheibe nicht berührt.

Im eingebauten Zustand der Welle 11, beispielsweise in einer Pumpe, wird in die Welle 11 über eine Schnittstelle, an der sie mit einer Antriebs- oder Abtriebsvorrichtung verbunden ist, ein Drehmoment eingleitet oder von dieser abgenommen. Durch zusätzliche. Radialkräfte, wie beispielsweise Riemenzugkräfte, kann eine Verkippung der Welle 11 bezüglich ihrer Ruhelage im Bereich der Lagerbohrung 5 erfolgen. Anhand der Figur wird deutlich, dass bei dieser Ausgestaltungsform des Lagers 1 bei einer unveränderten Toleranz des Axialspiels des Lagers 1 die Toleranzkette sich aus wenigen Einzelteilen zusammensetzt. Dies ermöglicht, dass die Einzeltoleranz eines jeden Einzelteils, das Teil der Toleranzkette ist, weiter gefasst werden kann. Diese geringere Genauigkeit bei der Fertigung der Einzelteile führt zu wesentlich günstigeren Herstellungskosten der Einzelteile und des Lagers 1.

Denkbar ist es aber auch, bei unveränderter Genauigkeit der Einzelteile das Axialspiel durch die reduzierte Anzahl der Teile der Toleranzkette zu verkleinern. Das geringere Axialspiel führt dazu, dass die axiale Bewegung und Schwingung der Welle 11 wesentlich geringer ausfällt und dadurch bedingt die Kräfte auf die erste Anlaufscheibe 17 und die zweite Anlaufscheibe 29 wesentlich verkleinert werden.

Darüber hinaus ist es vorzugsweise vorgesehen, dass zumindest die erste Stirnfläche 25' der Lagerbuchse 3 eine Positionierungseinrichtung aufweist, die beispielsweise Vorsprünge oder Ausnehmungen aufweist, die mit komplementär ausgebildeten Vorsprüngen beziehungsweise Ausnehmungen der ersten Anlaufscheibe 17 zusammenwirken. Auf diese Weise ist es möglich, die erste Anlaufscheibe 17 am Grund 21 der Lagerbohrung 5 so zu positionieren, dass die durchgehenden Ausnehmungen in der ersten Anlaufscheibe 17 eine Verbindung der Ausnehmung 49 mit der Nut 53 der Lagerbuchse 3 gewährleisten und eine Verdrehung der ersten Anlaufscheibe 17 nicht möglich ist. Die Positionierungseinrichtung zeichnet sich dadurch aus, dass die Lagerbuchse 3 die erste Anlaufscheibe 17 in axialer Richtung gesehen nicht überragt und somit nicht Teil der Toleranzkette des Axialspiels des Lagers 1 wird.

Denkbar ist es auch, dass die Lagerbuchse 3 mit ihrer zweiten Stirnfläche 25" mit der zweiten Anlaufscheibe 29 beispielsweise über eine Positionierungseinrichtung zusammenwirkt. Die Lagerbuchse 3 liegt im Bereich ihrer Stirnfläche 25" nicht axial an der ersten Außenfläche 31' der zweiten Anlaufscheibe 29 an. Ein Zusammenwirken der Lagerbuchse 3 und der zweiten Anlaufscheibe 29 findet ausschließlich durch einen radialen Kontakt der Positionierungseinrichtung der beiden Teile statt. Dabei ist vorzugsweise gewährleitstet, dass die Lagerbuchse 3 frei von in axialer Richtung wirkenden Kräften in die Lagerbohrung 5 eingebracht ist und auch bei diesem Ausführungsbeispiel nicht Teil der Toleranzkette des Axialspiels ist.

Das oben genannte Ausführungsbeispiel beschränkt sich nicht auf die Anwendung bei Wellen, sondern ist ohne Weiteres auf die Anwendung bei Achsen übertragbar.

### Bezugszeichenliste

- 1: Lager
- 3: Lagerbuchse
- 5: Lagerbohrung
- 7: Flansch
- 9: Wellenbund
- 11: Welle
- 13: Außenfläche Wellenbund
- 15: Innenfläche Lagerbuchse
- 17: Erste Anlaufscheibe
- 19',19": Erste bzw. zweite Oberfläche der ersten Anlaufscheibe
- 21: Grund der Lagerbohrung
- 23', 23": Erste bzw. zweite Außenfläche des Wellenbunds
- 25',25": Erste bzw. zweite Stirnfläche der Lagerbuchse
- 27: Öffnung der ersten Anlaufscheibe
- 29: Zweite Anlaufscheibe
- 31', 31": Erste bzw. zweite Außenfläche der zweiten Anlaufscheibe
- 33: Buchse
- 35: Dichtungselement
- 37: Dichtungselement
- 39: Nut
- 41: Außenfläche der Buchse
- 43: Innenfläche des Flanschs
- 45: Verbördelung
- 47: Entlastungseinrichtung
- 49: Ausnehmung
- 51: Wellenkammer
- 53: Nut
- 55: Entlastungsbohrung

## Patentansprüche

1. Lager (1), insbesondere Axiallager einer gleitgelagerten Welle (11) oder Achse, mit einem das Lager (1) aufnehmenden Flansch (7), einer Lagerbuchse (3), einer mindestens eine erste Anlaufscheibe (17) aufweisenden Axialsicherung und einer das Lager (1) durchdringenden Welle (11) oder Achse, die einen Wellenbund (9) aufweist, mit einer in den Flansch (7) eingebrachten und die erste Anlaufscheibe (17) sowie den Wellenbund (9) aufnehmenden Lagerbohrung (5) und mit einer, die Lagerbohrung (5) abschließenden Buchse (33), **dadurch gekennzeichnet, dass** das axiale Spiel des Lagers (1) sich ausschließlich aus einerseits der Dicke der ersten Anlaufscheibe (17) und der - in axialer Richtung der Welle (11) oder Achse gemessenen - Dicke des Wellenbundes (9) und andererseits der - in axialer Richtung der Welle (11) oder Achse gemessenen - Länge der Lagerbohrung (5) berechnet.

2. Lager nach Anspruch 1, **dadurch gekennzeichnet, dass** die Lagerbuchse (3) in die Lagerbohrung (5) eingepresst, eingelötet oder eingeklebt ist.

3. Lager nach Anspruch 1 oder 2, **dadurch gekennzeichnet, dass** die Lagerbuchse (3) - senkrecht zu einer Achse der Lagerbuchse (3) verlaufende - Stirnflächen (25', 25") an ihren Enden aufweist und eine erste Stirnfläche (25') der Lagerbuchse (3) an einer Fläche der Lagerbohrung (5) anliegt.

4. Lager nach einem der vorhergehenden Ansprüche, **dadurch gekennzeichnet, dass** die Axialsicherung eine zweite Anlaufscheibe (29) aufweist, die an der der ersten Stirnfläche (25') gegenüberliegenden zweiten Stirnfläche (25") der Lagerbuchse (3) angeordnet ist.

5. Lager nach einem der vorhergehenden Ansprüche, **dadurch gekennzeichnet, dass** die Lagerbuchse (3) zumindest an ihrer an der ersten Anlaufscheibe (17) anliegenden ersten Stirnfläche (25') eine mit der ersten Anlaufscheibe (17) zusammenwirkende Positionierungseinrichtung aufweist.

6. Lager nach Anspruch 4 oder 5, **dadurch gekennzeichnet, dass** die Buchse (33) an der zweiten Anlaufscheibe (29) anliegt.

7. Lager nach einem der vorhergehenden Ansprüche, **dadurch gekennzeichnet, dass** die Buchse (33) in den Flansch (7) eingepresst, eingeklebt oder eingelötet ist und/oder eine die Buchse (33) sichernde Verbördelung (45) aufweist.

8. Lager nach einem der vorhergehenden Ansprüche, **dadurch gekennzeichnet, dass** der Flansch (7) eine Entlastungseinrichtung (47) aufweist.

9. Lager nach Anspruch 8, **dadurch gekennzeichnet, dass** die Entlastungseinrichtung (47) eine die Lagerbohrung (5) schneidende Entlastungsbohrung (55) aufweist.

10. Lager nach Anspruch 8 oder 9, **dadurch gekennzeichnet, dass** die Entlastungseinrichtung (47) mindestens eine in eine Innenfläche der Lagerbuchse (3) eingebrachte Nut (53) und mindestens eine in die erste Anlaufscheibe (17) eingebrachte Aussparung aufweist.

11. Lager nach einem der Ansprüche 8 bis 10, **dadurch gekennzeichnet, dass** eine in den Grund (21) der Lagerbohrung (5) eingelassene und diesen mit einer Wellenkammer (51) verbindende Ausnehmung (49) vorgesehen ist.

12. Lager nach einem der vorhergehenden Ansprüche, **dadurch gekennzeichnet, dass** der Flansch (7) an einem die Buchse (33) aufnehmenden Ende einen umbördelbaren Materialrand aufweist.

13. Lager nach einem der vorhergehenden Ansprüche, **dadurch gekennzeichnet, dass** die Buchse (33) mindestens ein Dichtungselement (35, 37) aufweist.

14. Lager nach Anspruch 12, **dadurch gekennzeichnet, dass** es eine O-Ring-Dichtung und/oder eine Radialwellendichtung umfasst.

## Claims

1. Bearing (1), particularly axial bearing of a slidingly supported shaft (11) or axle, having a flange (7) receiving the bearing (1), a bearing bushing (3), an axial retainer having at least one first thrust washer (17), and a shaft (11) or axle penetrating the bearing (1), having a shaft collar (9), with a bearing bore (5) formed into the flange (7) and receiving the first thrust washer (17) and the shaft collar (9), and with a bushing (33) closing off the bearing bore (5), **characterised in that** the axial play of the bearing (1) is exclusively calculated from the thickness of the first thrust washer (17) and the thickness of the shaft collar (9), measured in the axial direction of the shaft (11) or axle, on the one hand, and from the length of the bearing bore (5), measured in the axial direction of the shaft (11) or axle, on the other hand.

2. Bearing according to claim 1, **characterised in that** the bearing bushing (3) is pressed, brazed or glued into the bearing bore (5).

3. Bearing according to claim 1 or 2, **characterised in that** the bearing bushing (3) has end faces (25', 25") on its ends, the end faces extending perpendicularly to an axis of the bearing bushing (3), and **in that** a first end face (25') of the bearing bushing (3) abuts on a surface of the bearing bore (5).

4. Bearing according to any one of the preceding claims, **characterised in that** the axial retainer has a second thrust washer (29) arranged on the second end face (25"), opposite the first end face (25'), of the bearing bushing (3).

5. Bearing according to any one of the preceding claims, **characterised in that** the bearing bushing (3), at least on its first end face (25') abutting on the first thrust washer (17), has a positioning device interacting with the first thrust washer (17).

6. Bearing according to claim 4 or 5, **characterised in that** the bushing (33) abuts on the second thrust washer (29).

7. Bearing according to any one of the preceding claims, **characterised in that** the bushing (33) is pressed, glued or brazed into the flange (7) and/or has a crimped flange (45) securing the bushing (33).

8. Bearing according to any one of the preceding claims, **characterised in that** the flange (7) has a relieving device (47).

9. Bearing according to claim 8, **characterised in that** the relieving device (47) has a relief bore (55) intersecting the bearing bore (5).

10. Bearing according to claim 8 or 9, **characterised in that** the relieving device (47) has at least one groove (53) formed into an interior surface of the bearing bushing (3) and at least one recess formed into the first thrust washer (17).

11. Bearing according to any one of claims 8 to 10, **characterised in that** a recess (49) embedded in the bottom (21) of the bearing bore (5) and connecting it with a shaft chamber (51) is provided.

12. Bearing according to any one of the preceding claims, **characterised in that** the flange (7) has a crimpable material edge on an end receiving the bushing (33).

13. Bearing according to any one of the preceding claims, **characterised in that** the bushing (33) has at least one sealing element (35, 37).

14. Bearing according to claim 12, **characterised in that** it has an O-ring seal and/or a radial shaft seal.

## Revendications

1. Palier (1), en particulier palier axiale d'un arbre (11) ou axe logé sur palier lisse, comportant une bride (7) recevant le palier (1), un coussinet de palier (3), une sécurité axiale présentant au moins un premier disque de démarrage (17) et un arbre (11) ou axe traversant le palier (1), qui présente un collet d'arbre (9), avec un alésage de palier (5) mis en place dans la bride (7) et recevant le premier disque de démarrage (17) ainsi que le collet d'arbre (9), et avec un coussinet (33) fermant l'alésage de palier (5), **caractérisé en ce que** le jeu axial du palier (1) se calcule exclusivement, d'une part, à partir de l'épaisseur du premier disque de démarrage (17) et de l'épaisseur du collet d'arbre (9) - mesurée dans le sens axial de l'arbre (11) ou axe - et, d'autre part, à partir de la longueur de l'alésage de palier (5) - mesurée dans le sens axial de l'arbre (11) ou axe.

2. Palier selon la revendication 1, **caractérisé en ce que** le coussinet de palier (3) est enfoncé, soudé ou collé dans l'alésage de palier (5).

3. Palier selon l'une quelconque des revendications 1 ou 2, **caractérisé en ce que** le coussinet de palier (3) présente, au niveau de ses extrémités, des faces terminales (25', 25") - évoluant perpendiculairement à l'axe du coussinet de palier (3) - et **en ce qu'**une première face terminale (25') du coussinet de palier (3) est adjacente à une face de l'alésage de palier (5).

4. Palier selon l'une quelconque des revendications précédentes, **caractérisé en ce que** la sécurité axiale présente un second disque de démarrage (29) qui est disposé au niveau de la seconde face terminale (25") du coussinet de palier (3) opposée à la première face terminale (25').

5. Palier selon l'une quelconque des revendications précédentes, **caractérisé en ce que** le coussinet de palier (3) présente pour le moins au niveau de sa première face terminale (25') adjacente au premier disque de démarrage (17) un dispositif de positionnement coopérant avec le premier disque de démarrage (17).

6. Palier selon l'une quelconque des revendications 4 ou 5, **caractérisé en ce que** le coussinet (33) est adjacent au second disque de démarrage (29).

7. Palier selon l'une quelconque des revendications précédentes, **caractérisé en ce que** le coussinet (33) est enfoncé, collé ou soudé dans la bride (7) et/ou présente un bordage (45) sécurisant le coussinet (33).

8. Palier selon l'une quelconque des revendications précédentes, **caractérisé en ce que** la bride (7) présente un dispositif de décharge (47).

9. Palier selon la revendication 8, **caractérisé en ce que** le dispositif de décharge (47) présente un alésage de décharge (55) coupant l'alésage de palier (5).

10. Palier selon l'une quelconque des revendications 8 ou 9, **caractérisé en ce que** le dispositif de décharge (47) présente au moins une rainure (53) mise en place dans une surface intérieure du coussinet de palier (3) et au moins un évidement mis en place dans le premier disque de démarrage (17).

11. Palier selon l'une quelconque des revendications 8 à 10, **caractérisé en ce qu'**un creux (49) encastré dans le fond (21) de l'alésage de palier (5) et reliant ce dernier à une chambre d'arbre (51) est prévu.

12. Palier selon l'une quelconque des revendications précédentes, **caractérisé en ce que** la bride (7) présente au niveau d'une extrémité recevant le coussinet (33) un rebord de matériau pouvant être bordé.

13. Palier selon l'une quelconque des revendications précédentes, **caractérisé en ce que** le coussinet (33) présente au moins un élément d'étanchéité (35, 37).

14. Palier selon la revendication 12, **caractérisé en ce qu'**il comporte un joint torique d'étanchéité et/ou un joint radial d'arbre.
